# EUROPEAN PATENT SPECIFICATION

(11) **EP 1 225 987 B1**
(45) Date of publication and mention of the grant of the patent: **01.08.2007**
(21) Application number: 00957638.0
(22) Date of filing: 22.08.2000
(51) Int. Cl.: B08B 3/02

(54) **APPARATUS AND METHOD FOR REMOVING CONTAMINANTS FROM FINE GRAINED SOIL, CLAY AND SILT**
VORRICHTUNG UND VERFAHREN ZUM ENTFERNEN VON VERUNREINIGUNGEN AUS FEIN GEMAHLENER ERDE, SCHLICK UND TON
APPAREIL ET PROCEDE SERVANT A ELIMINER DES CONTAMINANTS CONTENUS DANS LES SOLS A GRAINS FINS, LA GLAISE ET LE LIMON

(30) Priority: 30.08.1999 US 151377 P
(43) Date of publication of application: 31.07.2002
(73) Proprietor: Biogenesis Enterprises, Inc., Springfield, VA 22150-2320 (US)
(72) Inventor: AMIRAN, Mohsen, C., Des Plaines, IL 60016 (US)
(74) Representative: Plougmann & Vingtoft A/S
(86) International application number: PCT/US2000/022945
(87) International publication number: WO 2001/015823

(56) References cited:
- US-A- 3 086 537
- US-A- 5 087 374
- US-A- 5 228 921
- US-A- 5 316 029

## Description

This invention relates to a device and method for effectively removing contaminants from fine grained soils, clay silt and sediment particles.

### SUMMARY OF THE INVENTION

This invention relates to a device for removing contaminants from soil, clay and sediment particles as may be found in areas contaminated by industrial chemicals, oils and the like. The device uses liquid to effectively remove contaminants from the surface of the soil particle. The device creates a zone of extreme turbulence by means of opposing high pressure jets of liquid directed at a single point. A slurry inlet device which injects a slurry of contaminated soil into the area where of the discharge from the nozzle devices. Contaminants are removed from the soil particles in the slurry as they pass through the intersection zone of the discharge from the water jets and the nozzles. By this means, the contaminants are separated from the surface of the soil particle. This leaves a substantially contaminant free fraction of particles, and the contaminants can then be separated from the liquid by means well known in the art.

### DESCRIPTION OF THE DRAWINGS

Figure 1 is a schematic diagram showing the steps of pretreatment phase of separation of contaminated soils by size, preparation of the slurry to be treated, and the utilization of the collision chamber for treatment. The diagram also shows addition of various enhancers which improve the removal rate of the washing liquid.
Figure 2 is a side view of the collision chamber.
Figure 3 is a top view of the collision chamber lid.
Figure 4 is a cutaway of the upper third of the collision chamber.
Figure 5 is a detailed diagram of the nozzle and high pressure jet assembly which is shown in place in figures 2 and 4.

### BACKGROUND OF THE INVENTION

Removal of contaminants from soil and sediment is a major concern for industry and governmental agencies. Purchasers and sellers of property often must submit certification that the property is free from environmental contaminants such as chemicals and oils prior to obtaining financing. Environmental awareness has also heightened the demand for effective contaminant removal systems.

Soils that are subject to contamination can be found in any manufacturing area. Companies that make, use or store chemicals or oils often experience spill events such as leaking storage tanks or spills during transport. Service stations or other facilities that use underground storage tanks often have contaminants around the tanks due to small leaks or spills that occur in filling the tanks.

The soils that are affected by spill events are a combination of many particle sizes. Contaminated soil particles may range in size from large rocks to fines and clays, which are extremely small particle sizes.

Environmental cleanup protocols usually call for separation of the contaminated soil into its fractions based upon size. The basis for such separation is that larger sized soil particles are easier to clean. Thus, particles sized greater than about 0.6 mm are separated from the smaller particles.

Generally the larger particles are cleaned using conventional means known in the art. Smaller particles size fractions of contaminated soils are transported to appropriated storage and disposal facilities.

This process does not clean the entirety of contaminated soil particles. The standard practice merely transfers the contaminated fraction of fine size particles to a facility where such particles are stored. In certain instances contaminated soils are treated as hazardous waste.

Sand, gravel and stone, all of which particles are larger than .063 mm can be cleaned with relative ease. Smaller soil particles are more difficult to clean, and therefore these particles have generally been removed from the soil to be disposed of as hazardous or special waste. Thus, soil cleaning has involved a reduction of volume of the total contaminated soil in by removal of contaminants and pollutants from larger grained soil particles and separation of the fine grained particles for disposal.

Disposal costs are high for the transportation and storage of contaminated soils and clay. The availability of disposal sites for such contaminated soil and sludge is limited by the availability of land that is suitable for disposal. Disposal and storage options are further limited by the desire to retain contaminants in an essentially closed system wherein the contaminants will not leach to a neighboring water table.

Technologies are well-known in the art for cleaning larger grain sizes of soils using surfactants, heat or mechanical processes such as agitation. By these means, which can be used alone or in combination, contaminants are disbursed in a cleaning liquid which can be further treated by a variety of processes to remove or reduce chemical contaminants in the liquid.

Soil cleaning (which here concerns sediment, soil, fines, clays and large particle cleaning) is based upon the principle of separation and optimization of treatment directed at specific particle size domains. Soil cleaning can be applied to a wide variety of projects wherein contaminants are present.

These processes are ineffective for the removal of contaminants from particles that are smaller than about 0.6 mm in diameter. Thus the well known technologies for removing contaminants from soils and sediments are only effective for the larger soil particles. The current technology requires separation of contaminated soil into two unique streams, that being larger particles (diameter larger than about 0.5 mm.) and fines and clays.

The larger size particles can be effectively cleaned using standard methods, and the washed soil can be safely returned to the site after treatment. The fines or particles smaller than about 0.63 mm are not able to be cleaned using standard methods. Particles in this size domain are segregated from the totality of contaminated soil and then disposed of in an appropriate facility, or stored.

Thus, current soil cleaning technologies are only effective for large soil particles. The smaller particles are not cleaned at all, but simply transferred to a storage facility such as a licensed hazardous waste facility. This requires that the site owner or operator pay high costs for transport and storage of contaminated particles. The disposal facility also must be carefully constructed and monitored to prevent leakage from that site to groundwater. In essence this simply transfers the problem from the original contamination site to a storage facility. The treatment of contaminated soil has not been successful for cleaning fine grained soil material.

The present invention effectively removes contaminants from the entirety of contaminated soils and avoids the problem of disposal of the fraction of contaminated soil that includes the fines and clays. Application of this device to a contamination site avoids disposal of large amounts of contaminated soil as hazardous waste.

Contaminated soils generally have contaminants in three typical states; as free material, as surficially adsorbed material or as small or colloidal material wherein contaminants are bound physically or electrochemically to the finer grains of soil. The standard method of reducing soil contamination through the use of particle size separation is based on the fact that most organic or inorganic contaminants will tend to be associated with the fine grained soil fraction usually represented by clays and silts. Removal and disposal of the fines and clays will take a large amount of the contaminants out of the soil. However, it really does not clean all of the contaminated soil.

Decontamination of soil requires an understanding of the nature of the soil matrix in which the contaminants are bound. Generally, a coarse soil matrix, consisting primarily of large soil-sized particles is the ideal candidate for conventional soil cleaning or washing.

Contaminated soils are generally treated by the standard methods of separation by size and washing of larger particle sizes. Contaminants suitable for removal by conventional methods are semi-volatile organic compounds, pesticides, poly-chlorinated bi-phenols (PCB), metals, certain radio-nucleotides, and poly-aromatic hydrocarbons or soil particles >2 mm in diameter. Volatile organic compounds (VOC's) are not particularly suited as target contaminant treatment materials because the generally aggressive mixing and material handling in the cleaning process results in the possibility of resultant release of VOC's to the air.

The usual limitation in soil washing or decontamination results from the type of soil matrix and the contaminant involved. Contaminants generally adhere or are adsorbed at a greater rate in fine grained materials. This is a result of the complex and strong binding forces that are exerted by fine grained materials. Course grained materials may also retain contaminants as a result of adsorptive binding forces, however large grained materials are generally easier to clean as the adsorptive binding force is generally lower as the particle size increases.

The result of application of standard methods of soil washing are that fines and clay are sent to disposal or storage sites because of the limitation of conventional cleaning processes. Thus the segregation of fines from the larger soil matrix reduces the volume of contaminated soil requiring disposal. However, separating the fines and clays does not solve the problem. It only results in a storage problem. The contaminated soils must be transported and stored at costs in the range of $20 to $200 per cubic yard, depending on the type of contaminant.

The conventional process may separate relatively uncontaminated soil fractions from more heavily contaminated fines. The resulting fines slurry may then be treated by application of a bio-activated treatment or metal chelation. The fines in clay essentially are treated to result in a less contaminated sludge product. This process generally concentrates organic contaminants into a contaminated fines slurry which can account for a majority of the organic contaminants by weight, while initially being a smaller fraction of the total process output. In addition, these fine grained materials are more difficult to dewater to form a sludge cake because of the affinity of smaller particles to adsorb a variety of materials including water and other hydrophilic contaminants.

Standard soil washing procedures begin with pretreatment through shredding and separation devices to segregate soil and sediment by particle size. The soil is then directed to a shaker screen that separates particles into streams based upon particle size. Material greater than one to two millimeters is treated in a standard large particle soil washer, which involves the application of heat, agitation, and surfactants to separate adsorbed material from the larger particle sizes. Smaller particle sizes are directed to disposal. These particles may be dewatered, if necessary, in a hydrocyclone for liquid and solid separation.

Surfactants are often added to the cleaning liquid to accelerate the process and aid in the process of breaking the adsorptive and absorptive bonds between the contaminant and the contaminated particle. However, surfactants may present additional difficulties due to the toxicity of the surfactants. Many devices for removing contaminants from soil particles are known in the art. These devices do not decontaminate fine soil particles, clays, silts and the like.

In United States Patent 4,415,368 to Kroon, a method is disclosed wherein a jet pipe is employed to produce a vacuum which is to theoretically remove the contaminants by means of passing the particles through a curtain spray of water. Kroon uses the water curtain to separate particles into their smallest basic unit, thereby breaking up clumps of contaminated soil. The larger particles are then cleaned in this method, and the smaller particles and contaminants are separated by flocculation. According to NATO Report, Demonstration of Remedial Action Technologies for Contaminated Land and Groundwater, Final Report, 1986-1991 published by the U.S. Environmental Protection Agency, February 1993, small particles, of diameter less than 0.03 to 0.05 mm are not cleaned effectively by the water jets in the configuration and at the pressures put forth by Kroon.

In Kroon's method, contaminants are theoretically separated from the soil particles by application of a water stream which creates a vacuum. The pressure of the water stream is 250 bar which is approximately 3,500 psi (pounds per square inch). However, this method does not effectively remove contaminants from clays or finer grained soil.

Darley, in United States Patent 3,764,008 discloses a method for de-oiling sand using a combination of jet cyclones and Venturi arrangement. Darley uses centrifugal forces to separate oily waste from sand. His process requires several passes through the device to remove only a portion of the contaminant. However, this method does not effectively remove contaminant from fine grain particles as does the present invention. Further, the device disclosed does not effectively treat the very finest sand particles as are commonly encountered and which are classified as sands, clay, or silt. Also, his process does not utilize a method that is similar to this invention, in either its method, configuration or result.

Other methods have been disclosed which essentially employ the application of heat to volatilize or incinerate contaminants. The disadvantage of these methods are that contaminants may be released to the air, and, the incineration method required huge input of thermal energy which is not as economically efficient as the present invention.

### DETAILED DESCRIPTION OF THE INVENTION

This invention utilizes apparatus to mechanically remove contaminants from the surface of soil, silt, clay and fines particles. These particles are entrained into a liquid carrier to form a slurry. The liquid carrier is introduced to a region of intersection of discharge streams from previously positioned nozzles. The discharge streams may be water alone, or water mixed with a surfactant. These discharge streams are discharged from two or more substantially opposing nozzle devices. The nozzle devices are attached to a frame. The frame is utilized to support the nozzle means, and also functions to allow the proper positioning of the nozzle devices.

The nozzle devices discharge liquid in a preferred pressure of between 13.8 MPa (2,000 psi) and 138 MPa (20,000 psi). The pressure setting is determined based upon the size of particle treated and the type of contaminant that is to be removed from the surface of the particle. In addition, utilization of a single nozzle can be accomplished using a discharge from the nozzle at about 69 MPa (10,000 psi) to about 138 MPa (20,000 psi).

A stream of the soil that is to be treated is injected or inserted into the area where the streams of washing liquid are discharged from the nozzle or where the discharge from at least two nozzles converge. In this area, the particles of soil are subjected to a total force of about 27.6 MPa (4,000 psi) to about 414 MPa (60,000 psi) depending upon the number of nozzle devices employed.

In the most preferred embodiment, discussed below, the total number of nozzle devices used is four. However, the operator may find that use of one, two, three, four, five or more nozzle devices may be appropriate and effective to accomplish the removal of contaminants from the surface of small sized soil, silt and sediment particles.

The invention may also be modified to affect the angle of collision between the discharge of the nozzle devices and the inlet stream of slurry. It is to be remembered that the slurry may contain a carrier liquid, such as water with the slurry. The slurry can also have surfactant added to it during pre-treatment or during the treatment in the collision chamber.

The slurry discharge is directed to a point of discharge from the nozzle. If more than one nozzle is employed, the slurry discharge should be directed to the point of intersection of the nozzles. This can be accomplished by adjusting the nozzle support frame, directing the nozzles in a particular direction, or by altering the angle of insertion of the stream of the soil slurry.

The zone of convergence of the streams from the nozzle devices is a zone where objects or particles injected into the area will be subject to great force. The contaminated particles that are inserted into this zone have the contaminant removed from the particle. It appears that most contaminants are on the surface of the smaller particles of soil. Thus the bond between the contaminant and the soil particle is adsorptive. This bond is easily disrupted as such a bond is primarily a weak electro-mechanical bond. By this means, the soil particle is then separated mechanically from the contaminant. The contaminant particles remain in the liquid carrier and the soil particles are directed to the bottom of the collision vessel by means of gravity. From there, the carrier, cleaned soil particles and used cleaning liquid is discharged by means of a drain mechanism, as is well known in the art.

It is the force of the liquid discharged from the nozzle device, or in the zone of convergence of the opposing discharges from the nozzle mechanism which removes the contaminants from the surface of the particles that are cleaned. This turbulence must be sufficiently great. It has been determined that the number of nozzles determines the discharge rate from the nozzle devices.

When a single nozzle is employed, it was found that discharge of about 69 MPa (10,000 psi) to about 138 MPa (20,000 psi) resulted in removal of contaminants in the range of about 85 percent removal to about 90 percent removal. The utilization of two or more nozzles increased the removal rate of the contaminants. When two or more nozzles are used, the discharge rate from the nozzles of about 13.8 MPa (2,000 psi) to about 138 MPa (20,000 psi) are effective in removal of more than about 90 percent of the contaminants.

The discharge of the cleaning liquid at sufficiently high pressure may be enhanced by addition of surfactant to the washing liquid or by addition of surfactant, to the carrier of the soil slurry stream. The interaction of the mechanical forces with or without surfactant are thereby sufficient to accomplish the mechanical separation of contaminants from soil particles.

The result of application of the instant device is a slurry of clays, fines and silts which are cleaned within the range of from about 89% removal of contaminants to about 99% (or greater) removal of contaminants. This range allows the treated material to be used as uncontaminated soil.

Multiple cleaning cycles can be accomplished by reintroducing the treated material into the cleaning vessel and repeating the cycle.

A particular advantage of use of this device is that contaminants tested in utilization of the claimed device, resulted in cleaned soil particles (clays, fines and silts) that are suitable for use in any area. The removal of contaminants was so thorough as to preclude disposal of these materials at any hazardous waste or other special waste facility.

Thus, this device provides for cleaning of these finer particles while avoiding the additional cost of disposal. It is estimated that the cost for treatment per cubic yard using this device is substantially less than the cost of disposal of contaminated materials in the range of $4.00 to $350.00 and up for each cubic yard of contaminated soils. Such disposal must be accomplished at a licensed hazardous or special waste facility and requires transport of the material to be regulated by several agencies.

The present invention is capable of cleaning heavy, hydrocarbon pollutants including crude oil, poly-aromatic hydrocarbons, fuel oil and diesel from most matrices, including fines and clays. The process is appropriate for contaminants in the broad range of organic, inorganic and metal compounds where clay and silt is often the predominant media can be effectively decontaminated or cleaned using this application.

The present invention solves three obstacles to wide spread implementation of soil washing technology. These obstacles are, inability to handle heavy molecular weight contaminants or pollutants, inability to wash small sediment such as silt and clay particles, and the huge capital cost and relative immobility of large processing plants used in soil washing technologies.

The present invention also incorporates application of synthetic bio-surfactant chemicals (Biogenesis Enterprises, Inc., Milwaukee, Wisconsin) that may be used depending upon the contaminants encountered. These bio-surfactant chemicals can provide continuing remediation action after the washing is completed to more thoroughly reduce the contaminant levels in the washed soil product.

The present invention is an on-site technology which may be used for all soil types contaminated by organic pollutants and metals. Particles greater than about 0.5 mm are treated by standard soil washing processes and the liquid employed for such treatment is then further treated to remove contaminants from that liquid. Particles sized at less than about 0.5 mm can be easily treated in the device of this invention, i.e. this soil and sediment washing process.

The cleaning fluid, which can be water alone, can be further treated and the cleaned soil and sediment is then returned to the site or otherwise used.

The application of this invention can be in conjunction with a complex bio-remediating surfactant blend, in conjunction with water, heat, mixing and friction to clean soil particles. It is well known in the art that large particle size washing units can clean more than 80 cubic yards an hour.

In the present invention, sediment and soil particles (also defined as fines and clays) can be cleaned in a mobile continuous flow unit at a rate of more than 80 yards an hour without requiring additional disposal of fines and clays.

The equipment requirements include particle sizing equipment, tanks, the watering and water treatment equipment and a bio-reactor all of which are standard in the art. The collision chamber, which is the subject of this invention, allows the operator to clean the fines and clays.

The sediment washing device can be configured as a continuous flow unit.

Segregation of particle size may be accomplished using the Wentworth Classification or other system well known in the art. The only requirement that must be met is that grain size be less than about 5 mm in diameter.

### Description of the Configuration of the Device

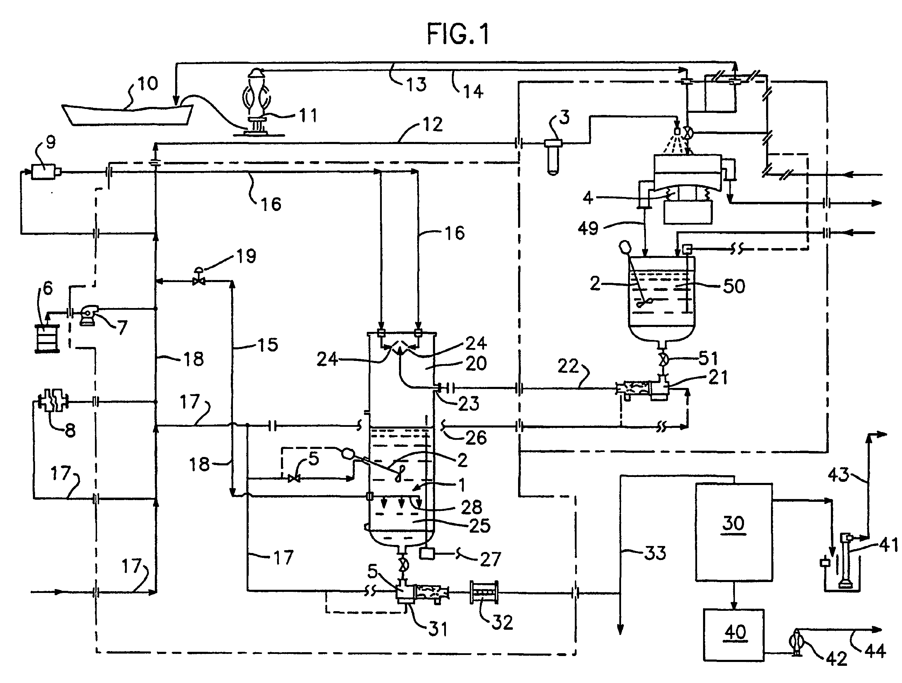

In this discussion, the device is shown in Figures 1-4. The configuration is suitable for use in cleaning a large quantity of soil taken from a contaminated area which had been used as an industrial site. The contaminated soils in this area were a combination of sand, gravel, loam, fine sand and clay.

The sediment washing system was configured in two basic sections. These sections provided for sediment sizing and preparation of soils for treatment in Part 1 and cleaning of soil particles in the cleaning vessel in Part 2.

In the first step, and with reference to Figure 1, it is seen that contaminated material, also referred to as sediment, is first separated according to particle size. The material was taken from sediment pond 10 and piped via sludge line 14 to the wet screen apparatus 4. The wet screen feed pump 11 used was Liquid Waste Technology of Somerset, WI, the Pit Hog 900 Hydraulic Pump. The sludge was moved along the sludgeline 14 by means of the wet screen feed pump 11. When the sludge material is processed through the wet screen 4 (Vibro-Energy Separator LSZ4S461 SWECO Inc., Florence KY.) materials having a diameter of greater than about 0.5 mm are separated. The smaller materials are transported to the fines clay storage tank 50 by means of a fines clay hose 49. In line mixers may be employed to prevent the material from settling and to aid in movement (Model 50--FT-2 Inliner. Grey Lightnin, Toronto, CAN). Larger size materials are treated by conventional means well known in the art.

In the fines clay mixing chamber 50 the material is stirred by means of a mixer assembly 2 (Litnin, Model V5P55 VEKTOR Mixer with 11.8" in a turbine, Litnin Co., Rochester, NY). Mixer assemblies are well known in art. The fines clay mixture has water added to it to form a slurry. The fines clay slurry then flows from the fines clay tank 50 through a fines clay feed meter 51 to the collision chamber feed pump 21 wherein it is piped through the fines clay through pipe 22 to the collision chamber 20.

Step 2 of the process occurs in the collision chamber 20 where contaminant removal occurs. Upon entering the collision chamber 1 the fines clay slurry is passed through the intersection point of the spray from nozzle devices 24. The treated slurry then drops by means of gravity to the treated slurry holding tank 25 in the collision chamber 20. The slurry in the mixing zone of the collision chamber 20 was then gently agitated with a mixer assembly 2 to keep the cleaned material in suspension in the carrying liquid. This is accomplished by means of a mixer 2 (Litnin, V5P55 VEKTOR Litnin, Rochester, NY). The treated soils were then removed from the collision mixing vessel by means of gravity or an auxiliary feed pump 31, through the drain means 304 and thence through the exit hose 31.

The nozzle device 24 is mounted on a nozzle adjustment arm 407. This nozzle adjustment arm 407 is comprised of the nozzle bar 401, which is affixed to the nozzle collar 402. This assembly is attached to the nozzle frame 400. The nozzle bar 401 can be adjusted with reference to the level of any of the other nozzles 24, if more than one nozzle is used. In addition, the nozzle devices 24 may be adjusted so that the discharge from the nozzle device, or any one of them, may be at a particular angle relative to the discharge from the slurry inlet pipe 231. These adjustment features are designed to allow the operator to adjust the angle of discharge of the nozzle. The nozzle adjustment arm 407 and the nozzle anchor adjustment bracket 341 are cooperatively attached to the nozzle support gusset 342. The various elements of the nozzle support means can then be adjustably fitted to the nozzle bar 401, which forms a part, of the frame means for holding the nozzle devices at a particular angle and at the desired height within the cleaning vessel.

The nozzle adjustment mechanism is made of stainless steel. The nozzle bar is made from carbon steel. Nozzle heads for discharge of, in this invention, cleaning liquid, are well known in the art.

The nozzle 500 for discharge of cleaning fluid was obtained from Quality Spray Products of Elmhurst, Illinois it is model number 1/4M6.5-7E Tungston Carbide Spray Nozzle. It is a high pressure nozzle for discharge of cleaning fluid at a desired pressure between 13.8 MPa (2,000 psi) and 138 MPa (20,000 psi), depending upon the configuration of nozzle 500 devices, the contaminant which is to be removed and the nature of the contaminated material that is cleaned in this device.

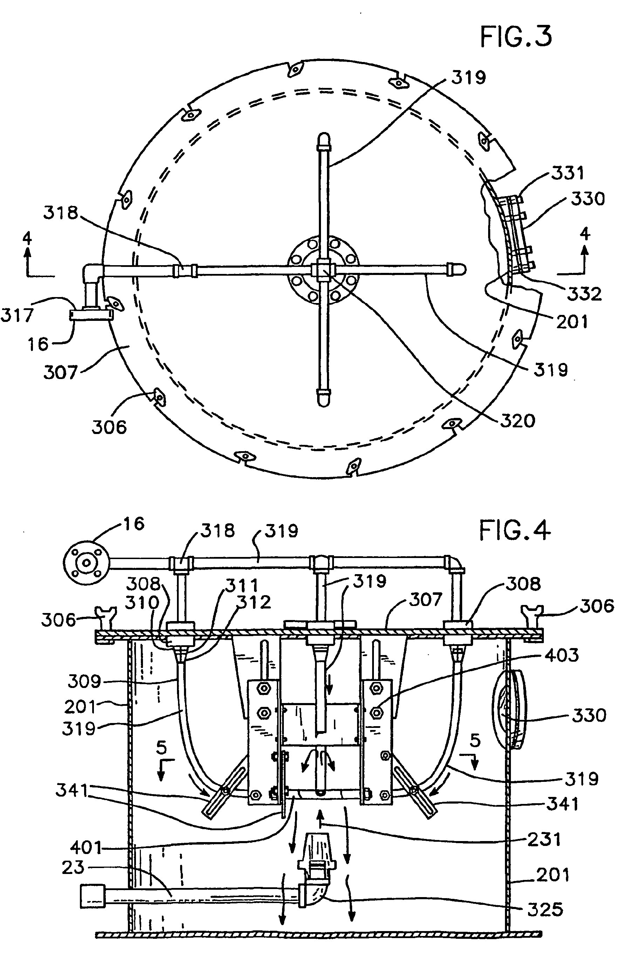

The nozzle adjustment frame 400 (and positioning device) allows the operator to select the appropriate angle of intersection of the discharge from the nozzle device relative to the sediment inflow discharge head 231 which is mounted so that the sediment inflow discharge preferably is above the plane of intersection of discharge from the nozzle devices 500. However, the operator may desire to have the sediment inflow from the top of the device depending on spacial constraints and design preferences. The position of the sediment inflow device is not critical to the function of this device, so long as the sediment inflow device allows the operator to cause the slurry in the sediment inflow 23 to pass through the plane, of intersection from the discharge of the nozzle devices 500 as is shown in Figures 3 and 4.

In operation of this device, the operator may wish to accomplish additional cleaning cycles with the treated material. This once-treated material may be recycled throughout the same collision chamber 20 or may be directed to a second or third unit for additional treatment cycles. However, it has been determined that additional treatment cycles are largely unnecessary if the cleaning cycle is optimized.

This optimization occurs by adjusting the angle of the plane formed by the discharge from the nozzle devices by adjusting the appropriate element on the nozzle frame, adjusting the temperature of the slurry inflow. Also, the temperature of the cleaning liquid may be adjusted to increase removal efficiencies. It has be found that raising the temperature of the cleaning liquid to about 37.8°C (100 degrees F).

In the event the additional treatment cycles are not necessary, the treated material is then piped by means of the treated sludge pipe 33 to a hydrocyclone 30. Hydrocyclones are well known in the art, such as (Encyclon, Inc. Kenosha, WI). After the water/sludge separation is accomplished in the hydrocyclone 30 the resulting solids are fed to the solids collection bin 40 and then transported by means of a solids transfer pump 42 or other appropriate mechanism to solids storage 44.

The water which was separated in the hydrocyclone 30 is piped via a liquid transfer pump 41 to a liquid storage tank 43 for subsequent treatment, or may be recycled through the soil washing process by means of additional piping which may be supplied by the operator in accordance with the requirements of the application of this invention.

In this example, the cleaning material is water, which can be ordinary tap water from a city or municipal source which is piped through pipe 17. The Mater may be heated to about 37.8°C (100°F) to about 71.1°C (160°F) It has been determined that the cleaning liquid may be at any temperature above freezing to a temperature approaching 93.3°C (200 degrees F), or from about 0.66°C (33 degrees F) to about 93.3°C (200 degrees F.).

Additionally, a cleaning liquid such as water may be combined with a measured amount of a selected surfactant from the surfactant dispenser 6. The surfactant that was employed in this invention was a bio-surfactant from Biogenesis Enterprises, Inc., Milwaukee, WI.

The surfactant/cleaning liquid combination can be piped through the surfactant feed pipe 180 or may be later introduced into the device by later injection into water in pipe 18. This gives a measured amount of surfactant which in combination with the water acts to enhance the cleaning effectiveness of the cleaning liquid.

The water alone or water-surfactant mix 17 is then directed through the high pressure piston pump 9 wherein the pressure is raised to a range between about 13.8 MPa (2,000) to a maximum of about 138 MPa (20,000 psi). The water or water surfactant mix under high pressure is directed through a high pressure line 16 to the nozzle assembly 24. The nozzle assembly 24 is arranged so that a spray of tap water alone or tap water in combination with surfactant 17 is directed to collide with a stream from the slurry inlet pipe 23 in the collision chamber 20.

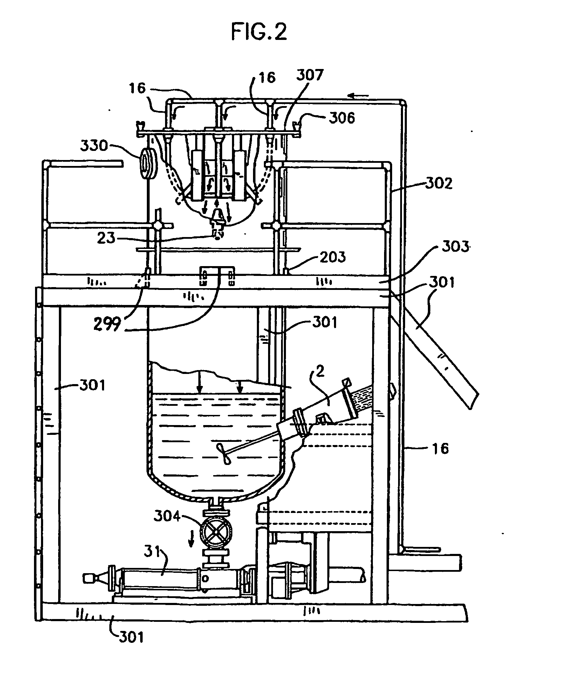

Referring to Figure 2, a front view of the collision chamber assembly, it is seen that the frame 301 supports the body of the collision chamber 20. There is also provided a walkway 303 which is framed in by a handrail 302 for operator-adjustments and observation. At the top of the collision chamber 20, the high pressure line 16 is cooperatively fitted and inserted through the collision chamber lid 307 by means of flanges 308.

The collision chamber lid 7 is cooperatively fitted to the collision chamber 20 body by means of flanges 306.

The collision chamber 20 is also fitted with level sensors 303 which are designed to ensure that the collision chamber 20 remains level for optimal performance of the nozzle assembly 24. The collision chamber device is fitted with a mixer assembly 2 which is standard in the art. This mixer assembly 2 is used to keep the treated solids, from separating into a heavy sludge and water component. The utilization of the mixer assembly 2 ensures that fines and other solids do not settle out; thereby the mixture remains in a slurry.

The treated material is directed of the mixing chamber 1 of the collision chamber assembly 20 by means of an isolation valve 304. This valve 304 is type well known-in the art. The treated slurry is then directed through a pump mechanism 31 to either a hydrocyclone 30 or is recirculated through the collision chamber 20 by means of a pipe assembly 16. An electrical panel 305 is provided for convenient mounting on the frame member 301. This electrical control panel 305 is used to control the pump such as pump 31. There is also provided a porthole window 330 which is mounted at the side of the collision chamber 20. This porthole assembly 330 is provided to allow the operator to observe the process of interaction of the surfactant water mix or water mix and the fines clay slurry.

Referring now to Figure 3, which is a top view of the collision chamber there is displayed the cover 307. The high pressure line 16 is here displayed on the top of the collision chamber wherein the high pressure lines are connected to the nozzle mechanism 24 by means of a socket weld 318 which is cooperatively adjoined to the high pressure surfactant hose 319. Other arrangements of the surfactant water delivery system to the high pressure nozzle 24 can be readily ascertained by one skilled in the art.

The collision chamber cover 307 is affixed to the body of the collision chamber by means of mounting flanges 306. In this arrangement, the nozzles (24) are attached to the cover 307. The view in Figure 3 shows an arrangement of high pressure feed pipes 319 which are positioned over the lid 307 of the collision chamber 20. The intersection point of the high pressure feed lines 319 is a flange 320 which holds the high pressure feed pipe 319 in stable relation to a second high pressure feed pipe 319. The practitioner may choose to use an arrangement of only two opposing nozzles 24 if desired. That would require only one high pressure feed pipe 319. The high pressure feed pipe 319 is attached to the nozzle assembly by means of a socket weld 318. The nozzle assembly 24 is further described by Figure 4.

Figure 4 is a partial view of the upper most portion the collision chamber 20. This figure shows the valve and nozzle assembly 24 which is held in place on the collision chamber lid 307 by means of an anchor mount 340, a support gusset 342 which is cooperatively attached by means of hex nuts and bolts 403. The nozzle assembly is fitted with adjusting means 341 which allow the operator to keep the nozzle assembly 24 in a level position. The slurry is directed into the collision chamber by means of the slurry inlet pipe 23. After it is piped into the chamber the slurry is further directed upward and exits the slurry inlet pipe 23 from a slurry inlet nozzle 231, and then the slurry is directed into the intersection area of the discharge from the nozzle device or devices 24. The slurry which is introduced into the collision chamber under pressure which need only be adequate to cause the outflow from the slurry inlet nozzle 231 to be sufficient to cause the slurry to actually reach an area that is sufficiently close to the nozzle discharge from the nozzle 24 so as to allow the cleaning liquid to effectively act on the slurry for removal of contaminants from the slurry.

This flow rate allows the slurry to be injected upwards into the intersection point of the discharge, of the nozzle assembly 24 wherein the washing or cleaning of the slurry takes place.

Again in this Figure 4 there is a quartz glass window 330 provided which is fitted into the side wall 201 of collision chamber 20 for purposes of allowing the operator to view the washing process. Despite the character of the slurry, the continued infusion of cleaning fluid, which is either water or water in surfactant mixture, rapidly cleans the glass, in the event that the slurry flow through pipe 23 is interrupted momentarily, or if the slurry is largely liquid, the process of cleaning the slurry, will also result in a wash down of the sides 201 of the collision chamber 20.

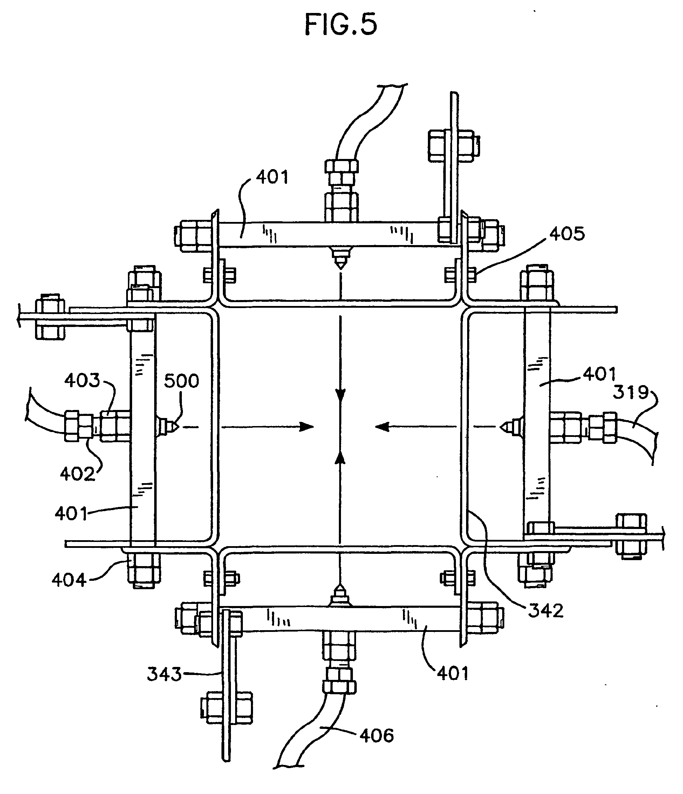

Figure 5 shows the nozzle assembly in its most preferred embodiment. This assembly is characterized by a stabilizing interaction of rack and gusset means which hold each of four nozzle bars 401. Each nozzle bar 401 is fitted to the nozzle 500 by means of a nozzle collar 402. The nozzle collar 402 is then cooperatively fitted to the high pressure surfactant line 16 by means of hex nuts 404.

The nozzle gusset brackets 342 are arranged above the discharge level of the nozzles 500 so as not to impede the flow from the nozzle 500.

The nozzle bars 401, in cooperation with the nozzle gussets 343 and 342 form a frame which suspends the nozzle structure 24 in the collision chamber 20. The nozzle bars 401 are fitted with adjustment means such as are widely known in the art. In this instance, the nozzle bars 401 are easily adjusted by means of adjusting the adjustment bracket 341.

This entire structure of Figure 5 is fitted to the collision chamber 20, as shown in Figure 4. Other arrangements for positioning the nozzle mechanism will be obvious to the practitioner of this invention. The particular arrangement of the device shown in the drawings may be manipulated without interfering with the efficiency of the device.

The nozzles assembly 24 is positioned so that the discharge from each and every nozzle 500 discharges at a point that is approximately level with any and all other nozzles 500. This discharge forms a layer of water that approximates the geometric shape of a plane. At a point approximately in the middle of the zone of discharge there is created a zone of intersecting water jets from the nozzles. This zone is the area where the discharge from the slurry inlet 231 will be directed. The angle of the plane defined by the discharge of the nozzles 500 and the slurry inlet 231 may affect the efficiency of the operation of this device.

The cleaning liquid, which is discharged from the nozzle(s) 500, may be water alone, water in conjunction with surfactant, heated water, or heated water in conjunction with tap water. The cleaning liquid in conjunction with tap water may be a mixture or surfactant may be injected into the cleaning fluid pipe 12, which transports the cleaning liquid from the high pressure piston pump 9 to the nozzle feed line 319 and thence to the nozzle 500.

The conditions and parameters of the preceding description were used in the application of the device, as further set forth in the following examples.

### Example I

The device as configured for this Example was a continuous flow unit for cleaning fines and clays. Capacities of up to 61.2 to 76.5 m³ (80 to 100 cubic yards) an hour were processed using parallel processing in a series of collision chambers.

Sediment contaminated with more than 4000 ppm poly-aromatic hydrocarbons (PAH) was selected for cleaning. The contaminated sediment was predominantly (81%) medium silt having an average particle size of less than 38 microns. The sediment was initially processed to separate large size material. The large particle size materials were diverted to a standard large particle washer for treatment. Material passing the grizzly flowed to a shredder and then to pretreatment tanks. The shredded material was blended, heated, and mixed with water and bio-surfactant chemicals. This formed a slurry.

The slurry was then passed to a shaker screen separator that sized particles into two streams. Material greater than 0.5 mm diameter was diverted to a standard large particle soil washer. Material 0.5 mm and smaller continued to the sediment washer feed hopper. From there the slurry was pumped to the sediment mixing chamber, where it was treated with a solution comprised of 2% bio-surfactant (Biogenesis, Milwaukee, WI) and tap water. This accomplished primary loosening of the bonds between the contaminant and the particle. The slurry was heated to 71.1°C (160°F).

After heating the slurry, water and surfactant mixture, the mixture (referred to in this Example as slurry) was piped to the collision chamber where the slurry was injected into the area of intersection of four nozzle devices.

The treated slurry was then collected in the lower portion of the collision chamber by means of gravity, as after the material is treated it fell to the bottom of the collision chamber.

Three collision chamber/collision scrubber sets were connected in series to accomplish successive washings. The treated slurry then flowed through hydrocyclone banks to separate solids down to 5 to 10 microns in size. The free liquid was routed to a centrifuge for final solid-liquid separation.

Solids were directed to the clean soil pile, whereas all liquid was routed to wastewater treatment to remove organic and inorganic contaminants. Decontaminated water was recycled back through the process. The treated sediments and fines were tested for cleanup efficiency. It was determined that the cleaning efficiencies exceeded 90 percent removal by application of these methods.

In Examples 2-7 the following general conditions were employed.

Particle sizes were selected for particles passing 10, 50, 100, and 200 mesh. The test contaminant was lubricating oil which was applied to the particles and allowed to remain on the particles for approximately 12 hours. Lubricating oil was selected as a representative contaminant of a medium weight organic type of contaminant. Lighter molecular weight contaminants would be expected to have higher removal percentages under all conditions, while heavier molecular weight contaminants would be expected to have somewhat lower removal efficiencies.

However, in all uses of this invention it will be expected that when the apparatus is used at its maximum efficiency for a particular contaminant removal task, cleaning efficiencies will be higher than 90%.

The cleaning liquid selected was water. In the following examples, no surfactant or other cleaning chemicals were added to the cleaning liquid evaluated so as not to affect the evaluation of the mechanical efficiencies of the device. Surfactants may be added to the cleaning liquid to increase the efficiency of the invention as discussed, supra.

As was seen in Example 1, the use of cleaning chemicals in the cleaning liquid, or alternatively mixed in with the soil and sediment slurry will raise contaminant removal effectiveness.

In each of the following examples, the flow from the nozzles discharging the cleaning fluid essentially form a plane. Each of the nozzles is attached to the frame member of the apparatus with the discharge portion of the nozzle pointed toward the center point of the apparatus.

The plane that is defined by the discharge of the nozzle devices, each of which are substantially the same height in the device, is defined in the following examples as alpha. If alpha equals zero, the plane defined by the discharge from the nozzle devices and the direction of the inlet stream of sediment slurry are parallel, i.e., flowing in the same direction. In this instance there is no collision between the sediment inflow and the discharge from the nozzle devices. If the angle between the discharge from the nozzle devices and the sediment inflow is 90 degrees, the nozzle discharge direction and the sediment in them are approximately perpendicular. As the angle of discharge increases, the inlet stream and the nozzle streams then oppose each other directly.

There is a further adjustment that can be made in the angle between the discharged from the nozzle flow devices and the sediment inflow devices. It is most preferred to have the angle at which the flow from the nozzle devices, which substantially discharge into a single plane, be approximately 30 degrees to the inflow from the sediment discharge.

In each of the following examples the number of nozzles was varied between one discharging nozzle and four discharging nozzle devices. It was concluded, based upon the evaluation of these results, that discharges from the nozzle devices were optimized at four nozzle devices. Minimal removal or effectiveness was achieved from discharge from one nozzle device.

In each of the following examples, it was shown that the angle of the plane defining the nozzle discharge relative to the direction of discharge of the slurry inlet flow was important in defining the efficiency of the invention. As the angle between the plane defining the nozzle discharge and the sediment inflow increase to 30 degrees, optimum results were defined.

The preceding information is used in each and every of the following examples.

### Example 2

In this example, grains were selected for above 50 mesh and below 50 mesh. In this example, temperature of the cleaning fluid was maintained at 100 degrees F. The number of nozzle devices employed was four. The angle of intersection between the plane defined by nozzle discharges and the inlet stream was maintained at 135 degrees.

Pressures were tested at 41.4 MPa (6,000 psi) discharge from each nozzle, and at 55.2 MPa (8,000 psi) and 82.7 MPa (12,000 psi) per nozzle. It was determined that when grain size is less than 50 mesh, discharge from the nozzle devices in the range between 55.7 and 82.7 MPa (8,000 and 12,000 psi) yielded a 99% removal effectiveness on particles passing 200 mesh. See Table I.

**TABLE I**

| SEDIMENT WASHING EFFECTIVENESS | | | | | | | | |
|---|---|---|---|---|---|---|---|---|
| Variation of Grain Size and Nozzle Pressure | | | | | | | | |
| | | Pressure (psi) MPa | | | | | | |
| | | (2,000) 13.8 | (4,000) 27.6 | (6,000) 41.4 | (8, 000) 55.2 | (10,000) (12,000) 69.0 | 82.7 | |
| Mesh Size | 10 Mesh | 89 | 96 | 99 | 99 | 99 | 99 | % Removal |
| | 50 Mesh | 90 | 96 | 99 | 99 | 99 | 99 | |
| | 100 Mesh | 76 | 91 | 98 | 99 | 99 | 99 | |
| | 200 Mesh | 72 | 90 | 97 | 99 | 99 | 99 | |

### Example 3

In this example, the number of nozzles employed was four, with each nozzle discharging cleaning fluid ab 41.4 MPa (6,000 psi). The angle of discharge between the plane defined by the discharge of the nozzle devices and the inlet flow was maintained at 90 degrees.

In this example, temperatures of cleaning fluid was tested in a range, above and below 37.8°C (100 degrees F). These temperatures were less effective on both large and small grain sizes (see Table 2).

**TABLE 2**

| SEDIMENT WASHING EFFECTIVENESS | | | | | | | |
|---|---|---|---|---|---|---|---|
| Variation of Grain Size and Washing Temperature | | | | | | | |
| | | Temperature | | | | | |
| | | (50 F) 10.0°C | (75 F) 23.9°C | (100 F) 37.8°C | (130 F) 54.4°C | (160 F) 71.1°C | |
| Mesh Size | 10 Mesh | 94 | 97 | 99 | 99 | 99 | % Removal |
| | 50 Mesh | 92 | 95 | 99 | 99 | 99 | |
| | 100 Mesh | 83 | 93 | 98 | 99 | 99 | |
| | 200 Mesh | 79 | 91 | 98 | 99 | 99 | |

It was determined that temperatures must be maintained between 37.8 and 71.1°C (100 and 160 degrees F) to obtain 99% effectiveness on particles that passed 200 mesh when removal of a contaminant such as the oil used in this example. Other applications of the device may use a higher or lower optimal temperature of the cleaning liquid depending upon the type of contaminant and the average size of the particle treated in the slurry.

### Example 4

In this example the angle of intersection between the plane defined by the discharge from the nozzle and the inlet flow was adjusted to 45 degrees relative to the flow of the slurry. In this example the discharge from each of the nozzles was maintained at a constant 41.4 MPa (6,000 psi). The temperature of the washing fluid was maintained at 37.8°C (100 degrees F).

In this example, increasing the number of nozzles yielded a roughly linear increase in effectiveness without regard to particle size. However, the angle between the discharge of the nozzle devices and the inlet flow at alpha equals 45 degrees only yielded removal rates around 90% regardless of grain size tested. Therefore it was determined that the angle of discharge at 45 degrees may be that the approximate lower limit of effectiveness for materials that are of 200 mesh. See Table 3.

**TABLE 3**

| SEDIMENT WASHING EFFECTIVENESS | | | | | | |
|---|---|---|---|---|---|---|
| Variation of Grain Size & # Nozzles for Alpha **=** 45 | | | | | | |
| | | Nozzles | | | | |
| | | 1 2 3 | | | 4 | |
| Mesh Size | 10 Mesh | 69 | 80 | 91 | 98 | % Removal |
| | 50 Mesh | 70 | 80 | 89 | 96 | |
| | 100 Mesh | 71 | 82 | 88 | 94 | |
| | 200 Mesh | 76 | 81 | 85 | 87 | |

### Examples 5

In this example, the discharge from the nozzle devices was maintained at 41.4 MPa (6,000 psi); The temperature of the washing liquid was maintained at 37.8°C (100 degrees F).

In this example, the angle of intersection of the discharge from the nozzle devices and the inlet flow was increased from 45 to 90 degrees. This dramatically increased the effectiveness of contaminant removal for the smallest grain sizes. In this example, the use of either three or four nozzles achieved removal of about 95% to about 97% for all grain sizes. See Table 4

**TABLE 4**

| SEDIMENT WASHING EFFECTIVENESS | | | | | | |
|---|---|---|---|---|---|---|
| Variation of Grain Size & # Nozzles for Alpha = 90 | | | | | | |
| | | # Nozzles | | | | |
| | | 1 | 2 | 3 | 4 | |
| Mesh Size | 10 Mesh | 68 | 80 | 96 | 99 | % Removal |
| | 50 Mesh | 76 | 85 | 96 | 99 | |
| | 100 Mesh | 78 | 86 | 95 | 97 | |
| | 200 Mesh | 83 | 89 | 94 | 96 | |

### Examples 6

In this example, the discharge from the nozzle devices was again maintained at 41.4 MPa (6,000 psi). The temperature of the washing liquid was maintained at 37.8°C (100 degrees F). In this example, increasing the angle between the point of discharge of the nozzle devices and the inlet flow from 90 to 135 degrees yields a less spectacular improvement in the removal of contaminants than the results obtained in Example 5. See Table 5.

**TABLES 5**

| SEDIMENT WASHING EFFECTIVENESS | | | | | | |
|---|---|---|---|---|---|---|
| Variation of Grain Size & # Nozzles for Alpha = 135 | | | | | | |
| | | # Nozzles | | | | |
| | | 1 2 3 | | | 4 | |
| Mesh Size | 10 Mesh | 70 | 82 | 97 | 99 | % Removal |
| | 50 Mesh | 77 | 88 | 96 | 99 | |
| | 100 Mesh | 82 | 89 | 96 | 98 | |
| | 200 Mesh | 87 | 91 | 95 | 97 | |

### Example 7

In this example the angle between the discharge from the nozzle devices and the angle determined between the direction of sediment inflow and the access determining the direction of the flow from the nozzle devices was varied. In this example, pressure of discharge from the nozzle devices was maintained at 41.4 MPa (6,000 psi). As is seen on Table 8 the increase of the angle between, the nozzle flow and the sediment inflow about 30 degrees has very little effect.

As the angle between the plane defining the nozzle discharge and the sediment inflow increased to 30 degrees, optimum results were obtained as reflected in the Table 6.

**Table 6**

| SEDIMENT WASHING EFFECTIVENESS | | | | | | |
|---|---|---|---|---|---|---|
| Variation of Grain Size & # Nozzles for Beta = 30 | | | | | | |
| | | # Nozzles | | | | |
| | | 1 | 2 | 3 | 4 | |
| Mesh Size | 10 Mesh | 68 | 80 | 96 | 99 | % Removal |
| | 50 Mesh | 76 | 85 | 96 | 99 | |
| | 100 Mesh | 78 | 86 | 95 | 97 | |
| | 200 Mesh | 83 | 89 | 94 | 96 | |

**Table 7**

| SEDIMENT WASHING EFFECTIVENESS | | | | | | |
|---|---|---|---|---|---|---|
| Variation of Grain Size & # Nozzles for Beta = 0 | | | | | | |
| | | # Nozzles | | | | |
| | | 1 2 | | 3 4 | | |
| Mesh Size | 10 Mesh | 69 | 78 | 82 | 81 | % Removal |
| | 50 Mesh | 77 | 79 | 81 | 82 | |
| | 100 Mesh | 77 | 80 | 82 | 83 | |
| | 200 Mesh | 84 | 85 | 84 | 86 | |

**Table 8**

| SEDIMENT WASHING EFFECTIVENESS | | | | | | |
|---|---|---|---|---|---|---|
| Variation of Grain Size & # Nozzles for Beta = 60 | | | | | | |
| | | # Nozzles | | | | |
| | | 1 2 | | 3 4 | | |
| Mesh Size | 10 Mesh | 71 | 81 | 96 | 99 | % Removal |
| | 50 Mesh | 78 | 85 | 95 | 99 | |
| | 100 Mesh | 78 | 86 | 95 | 99 | |
| | 200 Mesh | 84 | 89 | 93 | 95 | |

Other variations and adjustments of the device and method disclosed herein may be accomplished without departing from the invention disclosed herein.

## Claims

1. A device for purifying contaminated particles having a diameter of no more than 5 millimeters, which particles are entrained in a liquid carrier to form a slurry (50), and wherein the device is within a substantially enclosed vessel (20), the vessel being fitted with means for affixing a frame (400) having a nozzle device carrying support means (402) affixed within said vessel, comprising:
a) at least two high pressure nozzle devices (24, 500) cooperatively affixed to the frame and each said nozzle device having capacity to discharge liquid at 13.8 MPa to 137.9 MPa;
b) a slurry inlet (23) wherein the slurry inlet is positioned to discharge a slurry inlet stream into an area of discharge from each said nozzle device;
c) means for directing a discharge stream (9) from each said nozzle device toward an intersection point enclosed within the frame;
d) adjustment means (407) cooperatively affixed to said frame and each said nozzle device, wherein said adjustment means allow the discharge stream from each said nozzle device to be directed to the intersection point and intersect the slurry inlet stream being discharged from the slurry inlet device;
e) means for adjusting an angle (401) of the discharge stream from each said nozzle device relative to the slurry inlet stream;
f) means for injecting said slurry inlet stream (21) into said area of discharge whereby the discharge stream from each said nozzle device acts to remove contaminants from said contaminated particles and form a washed slurry; and
g) means for adjusting the discharge stream from each said nozzle device so that an angle of intersection between the discharge stream and the slurry inlet stream is between 0 degrees and 180 degrees.

2. The device of claim 1 wherein there are at least three nozzle devices arranged on the frame, the intersection point being at a point of convergence of the discharge streams from each of the nozzle devices.

3. The device of claim 1 wherein three nozzle devices are arranged on the frame approximately equidistant from each other:

4. The device of claim 1 wherein four nozzle devices are arranged on the frame approximately equidistant from each other.

5. The device of claim 1 wherein 5 nozzle devices are arranged on the frame approximately equi-distant from each other.

6. The device of claim 1 wherein 6 nozzle devices are arranged on the frame approximately equi-distant from each other.

7. The device of claim 1 wherein each nozzle device discharges liquid at 69.0 MPa to 137.9 MPa.

8. The device of claim 1 wherein the discharge streams from each nozzle device intersects the slurry inlet stream at an angle of intersection from 10 degrees to 170 degrees relative to the slurry inlet stream discharge direction.

9. The device of claim 8 wherein the angle of intersection between the discharge streams and the slurry inlet stream is between 30 and 90 degrees.

10. The device of claim 8 wherein the angle of intersection between the discharge streams and the slurry inlet stream is between 80 and 100 degrees.

11. The device of claim 8 wherein the angle of intersection between the discharge streams and the slurry inlet stream is 90 degrees.

12. The device of claim 8 wherein the angle of intersection between the discharge streams and the slurry inlet stream is 30 degrees.

13. The device of claim 1 wherein each nozzle device discharges liquid at 345 MPa to 103.4 MPa.

14. The device of claim 2 wherein each nozzle device discharges liquid at 34.5 MPa to 103.4 MPa.

15. The device of claim 1 wherein the discharge streams from said nozzle devices is at a temperature between 1.7 °C and 93.3 °C.

16. The device of claim 1 wherein the discharge streams from said nozzle devices is at a temperature of 37.8 °C.

17. The device for purifying contaminated particles according to claim 1, further comprising:
h) means for collecting the the washed slurry (25) and separating a major portion of the particles from the washed slurry (30).

18. The device according to claim 17 wherein the washing liquid is ejected from each said nozzle device at a pressure of 13.8 MPa to 137.9 MPa.

19. A method for purifying contaminated soil utilizing a device according to claim 1 comprising the steps of:
a) separating (4) contaminated soil to obtain contaminated particles having a diameter of no more than 5 millimeters diameter,
b) combining said contaminated particles with a liquid carrier to form a slurry (50);
c) discharging at least two streams of a washing liquid through the nozzle devices (24, 500) whereby the at least two streams of washing liquid intersect with one another and thereby create a zone of turbulence in the vicinity of the intersection point;
d) injecting said slurry (23) into said zone of turbulence whereby the slurry will combine with the at least two streams of washing liquid to form a treated slurry; and
e) collecting the treated slurry (25) exiting the zone of turbulence; and
f) separating said treated slurry (30) into fractions of liquids and particles.

20. The method of claim 19 wherein the washing liquid streams are water.

21. The method of claim 19 wherein the washing liquid streams are a mixture of water and surfactant, and the surfactant content of the washing liquid is from 0.1 percent to 5 percent.

22. The method of claim 19 wherein the slurry contains 5% to 50% solids by weight.

23. The method of claim 19 wherein the slurry contains 35% solids by weight

24. The method of claim 19 wherein a temperature of said slurry is 0.6 °C to 93.3 °C.

25. The method of claim 19 wherein a temperature of said slurry is 37.8 °C to 71.1 °C.

26. The method of claim 19 wherein the number of nozzles is 4.

27. The method of claim 19 wherein the slurry contains 49% water, 50% soil and 1% surfactant.

## Patentansprüche

1. Vorrichtung zur Aufbereitung verschmutzter Teilchen mit einem Diameter von nicht mehr als 5 Millimetern, die in einem flüssigen Träger mitgeführt sind, um eine Aufschlämmung (50) zu bilden, und worin die Vorrichtung sich innerhalb eines im wesentlichen geschlossenen Behälters (20) befindet, wobei der Behälter mit Mitteln ausgerüstet ist, um einen Rahmen (400) mit innerhalb des Behälters befestigten Trägermitteln (402) zum Tragen einer Düseneinrichtung, zu befestigen, umfassend:
a) mindestens zwei zusammen arbeitende, am Rahmen befestigte Hochdruckdüseneinrichtungen (24, 500), wobei jede Düseneinrichtung eine Kapazität besitzt, um eine Flüssigkeit bei 13,8 MPa bis 137,9 MPa abzugeben;
b) einen Aufschlämmungseinlauf (23), worin der Aufschlämmungseinlauf zur Ableitung eines aufgeschlämmten Eingangsstroms in ein Auslaufgebiet von jeder Düseneinrichtung eingerichtet ist;
c) Mittel zur Leitung eines Auslaufstroms (9) aus jeder Düseneinrichtung zu einem innerhalb des Rahmens eingeschlossenen Schnittpunkt;
d) Einstellmittel (407), die zusammen arbeitend am Rahmen und an jeder Düseneinrichtung befestigt sind, worin die Einstellmittel den Auslaufstrom aus jeder Düseneinrichtung zum Schnittpunkt leiten lassen und den aufgeschlämmten Einlaufstrom, der von der Aufschlämmungseinlaufeinrichtung abgeleitet wird, schneidet;
e) Mittel zum Einstellen eines Winkels (401) des Auslaufstroms aus jeder Düseneinrichtung im Verhältnis zum aufgeschlämmten Einlaufstrom;
f) Mittel zum Einspritzen des aufgeschlämmten Einlaufstroms (21) in das Auslaufgebiet, wobei der Auslaufstrom aus jeder Düseneinrichtung fungiert, um Fremdstoffe aus den verunreinigten Teilchen zu entfernen und eine gewaschene Aufschlämmung zu bilden; und
g) Mittel zum Einstellen des Auslaufstroms aus jeder Düseneinrichtung, so dass ein Winkel des Schnittpunkts zwischen dem Auslaufstrom und dem aufgeschlämmten Einlaufstrom zwischen 0 Grad und 180 Grad beträgt.

2. Vorrichtung nach Anspruch 1, worin es mindestens drei am Rahmen angeordnete Düseneinrichtungen gibt, wobei sich der Schnittpunkt an einem Konvergenzpunkt des Auslaufstroms aus jeder der Düseneinrichtungen befindet.

3. Vorrichtung nach Anspruch 1, worin drei Düseneinrichtungen am Rahmen ungefähr gleichweit entfernt voneinander angebracht sind.

4. Vorrichtung nach Anspruch 1, worin vier Düseneinrichtungen am Rahmen ungefähr gleichweit entfernt voneinander angebracht sind.

5. Vorrichtung nach Anspruch 1, worin 5 Düseneinrichtungen am Rahmen ungefähr gleichweit entfernt voneinander angebracht sind.

6. Vorrichtung nach Anspruch 1, worin 6 Düseneinrichtungen am Rahmen ungefähr gleichweit entfernt voneinander angebracht sind.

7. Vorrichtung nach Anspruch 1, worin jede Düseneinrichtung Flüssigkeit bei 69,0 MPa bis 137,9 MPa ableitet.

8. Vorrichtung nach Anspruch 1, worin die Auslaufströme aus jeder Düseneinrichtung den aufgeschlämmten Einlaufstrom an einem Schnittwinkel von 10 Grad bis 170 Grad im Verhältnis zur Auslaufrichtung des aufgeschlämmten Einlaufstroms schneiden.

9. Vorrichtung nach Anspruch 8, worin der Schnittwinkel zwischen den Auslaufströmen und dem aufgeschlämmten Einlaufstrom zwischen 30 und 90 Grad beträgt.

10. Vorrichtung nach Anspruch 8, worin der Schnittwinkel zwischen den Auslaufströmen und dem aufgeschlämmten Einlaufstrom zwischen 80 und 100 Grad beträgt.

11. Vorrichtung nach Anspruch 8, worin der Schnittwinkel zwischen den Auslaufströmen und dem aufgeschlämmten Einlaufstrom 90 Grad beträgt.

12. Vorrichtung nach Anspruch 8, worin der Schnittwinkel zwischen den Auslaufströmen und dem aufgeschlämmten Einlaufstrom 30 Grad beträgt.

13. Vorrichtung nach Anspruch 1, worin jede Düseneinrichtung Flüssigkeit bei 34,5 MPa bis 103,4 MPa ableitet.

14. Vorrichtung nach Anspruch 2, worin jede Düseneinrichtung Flüssigkeit bei 34,5 MPa bis 103,4 MPa ableitet.

15. Vorrichtung nach Anspruch 1, worin die Auslaufströme aus der Düseneinrichtung bei einer Temperatur zwischen 1,7°C und 93,3°C liegen.

16. Vorrichtung nach Anspruch 1, worin die Auslaufströme aus der Düseneinrichtung bei einer Temperatur von 37,8°C liegen.

17. Vorrichtung zur Aufbereitung verschmutzter Teilchen nach Anspruch 1, weiterhin umfassend:
h) Mittel zum Sammeln der gewaschenen Aufschlämmung (25) und Trennung einer wesentlichen Portion von Teilchen von einer gewaschenen Aufschlämmung (30).

18. Vorrichtung nach Anspruch 17, worin die Waschflüssigkeit aus der Düseneinrichtung bei einem Druck von 13,8 MPa bis 137,9 MPa entlassen wird.

19. Verfahren zur Aufbereitung verschmutzter Erde unter Anwendung einer Vorrichtung nach Anspruch 1, umfassend die Schritte:
a) Trennung (4) verschmutzter Erde zum Erhalt verschmutzter Teilchen mit einem Diameter von nicht mehr als 5 Millimetern;
b) Kombination der verschmutzten Teilchen mit einem flüssigen Träger zur Bildung einer Aufschlämmung (50);
c) Ableiten von mindestens zwei Strömen von Waschflüssigkeit durch die Düseneinrichtungen (24, 500), wobei die mindestens zwei Ströme von Waschflüssigkeit sich mit einer anderen schneiden und dabei eine Verwirbelungszone in der Nähe des Schnittpunkts schaffen;
d) Einspritzen der Aufschlämmung (23) in die Verwirbelungszone, wobei die Aufschlämmung mit den mindestens zwei Strömen von Waschflüssigkeit kombiniert wird, um eine behandelte Aufschlämmung zu bilden; und
e) Sammeln der behandelten Aufschlämmung (25), die die Verwirbelungszone verlässt; und
f) Trennung der behandelten Aufschlämmung (30) in die Abteilungen Flüssigkeiten und Teilchen.

20. Verfahren nach Anspruch 19, worin die Ströme von Waschflüssigkeit Wasser sind.

21. Verfahren nach Anspruch 19, worin die Ströme von Waschflüssigkeit eine Mischung aus Wasser und Tensid sind, und der Tensidgehalt der Waschflüssigkeit von 0,1 Prozent bis 5 Prozent beträgt.

22. Verfahren nach Anspruch 19, worin die Aufschlämmung 5% bis 50% Feststoffe pro Gewicht enthält.

23. Verfahren nach Anspruch 19, worin die Aufschlämmung 35% Feststoffe pro Gewicht enthält.

24. Verfahren nach Anspruch 19, worin die Temperatur der Aufschlämmung 0,6°C bis 93,3°C beträgt.

25. Verfahren nach Anspruch 19, worin die Temperatur der Aufschlämmung 37,8°C bis 71,1°C beträgt.

26. Verfahren nach Anspruch 19, worin die Anzahl von Düsen 4 ist.

27. Verfahren nach Anspruch 19, worin die Aufschlämmung 49% Wasser, 50% Feststoffe und 1% Tensid enthält.

## Revendications

1. Dispositif pour la purification de particules contaminées ayant un diamètre de 5 millimètres au maximum, lesdites particules étant entraînées dans un véhicule liquide pour former une suspension (50), lequel dispositif étant à l'intérieur d'un récipient substantiellement fermé (20), le récipient étant muni de moyens pour fixer un cadre (400) ayant des moyens de support (402) pour supporter un dispositif de buse, fixés à l'intérieur dudit récipient, comprenant :
a) au moins deux dispositifs de buse haute pression (24, 500) fixés de façon coopérative audit cadre, chacun desdits dispositifs de buse étant capable de déverser du liquide à entre 13,8 MPa et 137,9 MPa ;
b) une entrée de suspension (23), laquelle entrée de suspension est positionnée de façon à déverser un flux d'entrée de suspension dans une zone de déversement de chacun desdits dispositifs de buse ;
c) des moyens pour diriger un flux déversé (9) par chacun desdits dispositifs de buse vers un point d'intersection situé à l'intérieur du cadre ;
d) des moyens de réglage (407) fixés de façon coopérative audit cadre et à chacun desdits dispositifs de buse, dans lesquels lesdits moyens de réglage permettent de diriger le flux déversé par chacun desdits dispositifs de buse vers le point d'intersection et de couper le flux d'entrée de suspension qui est déversé à partir du dispositif d'entrée de suspension ;
e) des moyens pour régler un angle (401) du flux déversé par chacun desdits dispositifs de buse par rapport au flux d'entrée de suspension;
f) des moyens pour injecter ledit flux d'entrée de suspension (21) dans ladite zone de déversement, de sorte que le flux déversé par chacun desdits dispositifs de buse agisse pour éliminer les contaminants desdites particules contaminées et former une suspension lavée ; et
g) des moyens pour régler le flux déversé par chacun desdits dispositifs de buse afin qu'un angle d'intersection entre le flux déversé et le flux d'entrée de suspension soit de 0 degrés à 180 degrés.

2. Dispositif selon la revendication 1, dans lequel il y a au moins trois dispositifs de buse disposés sur le cadre, et le point d'intersection étant sur un point de convergence des flux déversés par chacun des dispositifs de buse.

3. Dispositif selon la revendication 1, dans lequel trois dispositifs de buse sont disposés sur le cadre de façon approximativement équidistante l'un de l'autre.

4. Dispositif selon la revendication 1, dans lequel quatre dispositifs de buse sont disposés sur le cadre de façon approximativement équidistante l'un de l'autre.

5. Dispositif selon la revendication 1, dans lequel 5 dispositifs de buse sont disposés sur le cadre de façon approximativement équidistante l'un de l'autre.

6. Dispositif selon la revendication 1, dans lequel 6 dispositifs de buse sont disposés sur le cadre de façon approximativement équidistante l'un de l'autre.

7. Dispositif selon la revendication 1, dans lequel chaque dispositif de buse déverse du liquide à entre 69,0 MPa et 137,9 MPa.

8. Dispositif selon la revendication 1, dans lequel les flux déversés par chacun des dispositifs de buse coupent le flux d'entrée de suspension à un angle d'intersection de 10 degrés à 170 degrés par rapport à la direction de déversement du flux d'entrée de suspension.

9. Dispositif selon la revendication 8, dans lequel l'angle d'intersection entre les flux déversés et le flux d'entrée de suspension est de 30 à 90 degrés.

10. Dispositif selon la revendication 8, dans lequel l'angle d'intersection entre les flux déversés et le flux d'entrée de suspension est de 80 à 100 degrés.

11. Dispositif selon la revendication 8, dans lequel l'angle d'intersection entre les flux déversés et le flux d'entrée de suspension est de 90 degrés.

12. Dispositif selon la revendication 8, dans lequel l'angle d'intersection entre les flux déversés et le flux d'entrée de suspension est de 30 degrés.

13. Dispositif selon la revendication 1, dans lequel chaque dispositif de buse déverse du liquide à entre 34,5 MPa et 103,4 MPa.

14. Dispositif selon la revendication 2, dans lequel chaque dispositif de buse déverse du liquide à entre 34,5 MPa et 103,4 MPa.

15. Dispositif selon la revendication 1, dans lequel les flux déversés par lesdits dispositifs de buse sont à une température entre 1,7°C et 93,3°C.

16. Dispositif selon la revendication 1, dans lequel les flux déversés par lesdits dispositifs de buse sont à une température de 37,8°C.

17. Dispositif pour la purification de particules contaminées selon la revendication 1, comprenant en outre :
h) des moyens pour récupérer la suspension lavée (25) et pour séparer une majeure partie des particules de la suspension lavée (30).

18. Dispositif selon la revendication 17, dans lequel le liquide de lavage est éjecté de chacun desdits dispositifs de buse sous une pression de 13,8 MPa à 137,9 MPa.

19. Procédé pour la purification de terre contaminée mettant en oeuvre un dispositif selon la revendication 1 et comprenant les étapes :
a) de séparer (4) la terre contaminée pour obtenir des particules contaminées ayant un diamètre de 5 millimètres au maximum ;
b) d'associer lesdites particules contaminées avec un véhicule liquide pour former une suspension (50) ;
c) de déverser au moins deux flux d'un liquide de lavage à travers les dispositifs de buse (24, 500), de sorte que les au moins deux flux de liquide de lavage se coupent créant ainsi une zone de turbulence à proximité du point d'intersection ;
d) d'injecter ladite suspension (23) dans ladite zone de turbulence de sorte que la suspension s'associe avec les au moins deux flux de liquide de lavage pour former une suspension traitée ;
e) de récupérer la suspension traitée (25) sortant de la zone de turbulence ; et
f) de séparer ladite suspension traitée (30) en fractions de liquides et de particules.

20. Procédé selon la revendication 19 dans lequel les flux de liquide de lavage sont de l'eau.

21. Procédé selon la revendication 19 dans lequel les flux de liquide de lavage sont un mélange d'eau et de surfactif, la teneur en surfactif du liquide de lavage étant de 0,1 pourcent à 5 pourcent.

22. Procédé selon la revendication 19 dans lequel la suspension contient de 5% à 50% en poids de solides.

23. Procédé selon la revendication 19 dans lequel la suspension contient 35% en poids de solides.

24. Procédé selon la revendication 19 dans lequel la température de ladite suspension est de 0,6°C à 93,3°C.

25. Procédé selon la revendication 19 dans lequel la température de ladite suspension est de 37,8°C à 71,1°C.

26. Procédé selon la revendication 19 dans lequel le nombre de buses est de 4.

27. Procédé selon la revendication 19 dans lequel la suspension contient 49% d'eau, 50% de terre et 1% de surfactif.
